# EUROPÄISCHE PATENTSCHRIFT

(11) **EP 3 546 084 B1**
(45) Veröffentlichungstag und Bekanntmachung des Hinweises auf die Patenterteilung: **20.01.2021**
(21) Anmeldenummer: 19157054.8
(22) Anmeldetag: 14.02.2019
(51) Int. Cl.: B21J 15/02, B21J 15/12, B21J 15/28, F16B 5/04

(54) **VERFAHREN ZUM VERBINDEN WENIGSTENS ZWEIER BAUTEILE MITTELS EINER STANZNIETVORRICHTUNG UND STANZNIETVORRICHTUNG**
METHOD FOR CONNECTING AT LEAST TWO WORKPIECES BY MEANS OF A PUNCH RIVET DEVICE AND PUNCH RIVET DEVICE
PROCÉDÉ DE LIAISON D'AU MOINS DEUX COMPOSANTS AU MOYEN D'UN DISPOSITIF DE RIVETAGE ET DISPOSITIF DE RIVETAGE

(30) Priorität: 28.03.2018 DE 102018204722
(43) Veröffentlichungstag der Anmeldung: 02.10.2019
(73) Patentinhaber: Robert Bosch GmbH, 70442 Stuttgart (DE)
(72) Erfinder: Woelke, Florian, 71229 Leonberg (DE); Ebinger, Oliver, 70794 Filderstadt-Plattenhardt (DE)

(56) Entgegenhaltungen:
- EP-A1- 3 281 721
- DE-A1-102007 059 422
- DE-A1-102015 213 436
- KR-A- 20160 011 060

## Beschreibung

Die vorliegende Erfindung betrifft ein Verfahren zum Verbinden wenigstens zweier Bauteile mittels einer Stanznietvorrichtung, sowie eine Stanznietvorrichtung.

### Stand der Technik

Verfahren zum Stanznieten dienen zum Verbinden wenigstens zweier in einem Verbindungsbereich insbesondere eben ausgebildeter Bauteile (Fügepartner). Ein Stanznietverfahren zeichnet sich dadurch aus, dass ein Vorlochen der miteinander zu verbindenden Bauteile nicht erforderlich ist. Vielmehr wird ein Niet mittels eines Stempels oder eines Stempelwerkzeugs in die wenigstens zwei Bauteile eingedrückt, wobei durch einen entsprechend geformten Gegenhalter, beispielsweise in Form einer Matrize, der mit dem Stempelwerkzeug zusammenwirkt, sichergestellt ist, dass der Niet oder die Bauteile sich in einer bestimmten Art und Weise verformen, um eine kraft- und formschlüssige Verbindung zwischen den Bauteilen herzustellen.

Weiterhin ist beispielsweise aus der EP 2 318 161 B1 ein sog. Ultraschall-Stanznietverfahren bekannt, bei dem ein Schwingungserzeuger wie beispielsweise ein Ultraschall-Generator verwendet wird, um ein oder mehrere Komponenten beim Verbinden der Bauteile in Schwingung zu versetzen. Durch diese Schwingung wird beispielsweise die aufzuwendende Kraft zum Eindrücken des Niets reduziert.

Aus der EP 3 281 721 A1 , welche die Basis für den Oberbegriff des Anspruchs 1 bildet, ist ein Ultraschall-Stanznietverfahren bekannt, bei dem während des Eindrückens des Niets ein Gradient der Kraft ermittelt wird, um eine Qualitätsbewertung des Stanznietprozesses durchführen zu können.

Die DE 10 2007 059422 A1 zeigt ein Verfahren für ein portables Nietgerät für eine Qualitätsbeurteilung auf Basis eines Vergleichs der an ermittelten Wegmesspunkten aufgebrachten Kraft der Setzeinrichtung.

Die DE 10 2015 213436 A1 beschreibt ein Ultraschall-Stanznietverfahren, bei dem der Verlauf einer Leistung eines Schwingungserzeugers während des Eindrückens eines Niets zur Qualitätsbewertung des Stanznietprozesses ermittelt wird.

Die KR 2016 0011060 A zeigt ein Stanznietvorrichtungsverfahren zur Qualitätsbeurteilung in Abhängigkeit der Verschiebung und Belastung eines Stempels während eines Setzvorganges.

### Offenbarung der Erfindung

Erfindungsgemäß werden ein Verfahren zum Verbinden wenigstens zweier Bauteile mittels einer Stanznietvorrichtung, sowie eine Stanznietvorrichtung mit den Merkmalen der unabhängigen Patentansprüche vorgeschlagen. Vorteilhafte Ausgestaltungen sind Gegenstand der Unteransprüche sowie der nachfolgenden Beschreibung.

Ein erfindungsgemäßes Verfahren dient zum Verbinden wenigstens zweier Bauteile mittels einer Stanznietvorrichtung, bei dem die wenigstens zwei Bauteile zwischen einem Stempel und einem Gegenhalter angeordnet sind bzw. werden. Dabei wird ein zwischen dem Stempel und einem dem Stempel zugewandten Bauteil der wenigstens zwei Bauteile angeordneter Niet mittels des Stempels in die wenigstens zwei Bauteile eingedrückt, indem der Stempel mit einer Kraft beaufschlagt wird. Hierzu kann ein entsprechender Antrieb verwendet werden. Zudem wird wenigstens eine beim Eindrücken des Niets beteiligte Komponente, die insbesondere den Stempel umfasst, beim Eindrücken mittels eines Schwingungserzeugers in Schwingung versetzt. Die Schwingungen können insbesondere mit einem von dem Schwingungserzeuger angeregten Schwingungskonverter auf die Komponente übertragen bzw. eingekoppelt werden. Als Schwingungserzeuger kommt dabei insbesondere ein Frequenz- bzw. Schall-Generator, insbesondere ein Ultraschall-Generator, in Frage, als Schwingungskonverter beispielsweise ein elektro-mechanischer Konverter wie ein Piezo-Konverter. Bei der Verwendung des Ultraschall-Generators wird dann auch vom sog. Ultraschall-Stanznieten gesprochen. Im Vergleich zu konventionellem Stanznieten ermöglicht eine Einkopplung von Schwingungen eine Reduzierung der nötigen Kraft, die durch den Antrieb aufgebracht werden muss, sowie eine bessere Verbindung der Bauteile durch den Niet.

Während des Eindrückens des Niets wird zudem zumindest zeitweise ein Gradient der Kraft ermittelt. Es kann sich dabei um einen zeitlichen Gradienten, d.h. Kraft pro Zeit, oder um einen örtlichen Gradienten, d.h. Kraft pro Weg, handeln. Weiterhin wird wenigstens ein Parameter der mittels des Schwingungserzeugers zu erzeugenden Schwingung wenigstens zeitweise unter Berücksichtigung des Gradienten der Kraft vorgegeben. Mit anderen Worten erfolgt also eine Vorgabe des wenigstens einen Parameters unter Berücksichtigung des Gradienten der Kraft bzw. basierend auf dem Gradienten der Kraft. Der Gradient der Kraft kann dabei insbesondere als Umschaltkriterium verwendet werden bzw. es kann der wenigstens eine Parameter zu einem von dem Gradienten der Kraft abhängigen Zeitpunkt verändert werden. Insbesondere kann damit also eine Steuerung oder Regelung des wenigstens einen Parameters unter Berücksichtigung des Gradienten der Kraft erfolgen. Erfindungsgemäß umfasst der wenigstens eine Parameter eine Frequenz und/oder eine Amplitude der Schwingung. Der wenigstens eine Parameter kann weiterhin eine Vorschubgeschwindigkeit umfassen. Unter der Vorschubgeschwindigkeit ist dabei insbesondere eine Geschwindigkeit zu verstehen, mit welcher der Stempel in Richtung des Niets bewegt wird.

Besonders bevorzugt sind dabei eine Reduktion der Amplitude der Schwingung und zugleich eine Erhöhung der Vorschubgeschwindigkeit, oder eine Erhöhung der Amplitude der Schwingung und zugleich eine Reduktion der Vorschubgeschwindigkeit. Die Frequenz kann zwar auch angepasst werden, jedoch wird diese vorzugsweise nicht (aktiv) verändert, da diese vom Schwingungserzeuger geregelt werden kann.

Beim konventionellen Stanznieten erfolgt eine Prozessregelung üblicherweise anhand definierter Konstanten bzw. Parameter. Dazu gehören beispielsweise eine Vorschubgeschwindigkeit (des Stempels), ein maximaler Stempel-Verfahrweg und/oder eine maximale, gewünschte Fügekraft (also eine Kraft, die maximal über den Stempel auf den Niet ausgeübt werden soll). Beim Stanznieten mit Schwingungseinkopplung, insbesondere beim Ultraschall-Stanznieten, kommen zu den bekannten Konstanten insbesondere noch eine Frequenz der Schwingung (z.B. 20 kHz) und eine Amplitude der Schwingung als Parameter hinzu.

Für das Nietergebnis ist es zweckmäßig, den gesamten Nietvorgang in mehrere Prozessstufen bzw. Phasen zu unterteilen. In jeder Phase können die genannten Parameter sowie insbesondere auch mit diesen gekoppelte Größen wie beispielsweise die Vorschubgeschwindigkeit unterschiedlich vorgegeben werden, was insbesondere zu unterschiedlichen eingebrachten Schwingungs- bzw. Ultraschallenergien führt. Je nach Art der zu fügenden bzw. zu verbindenden Bauteile bzw. Werkstoffe ist beispielsweise für eine Phase "Schneiden bzw. Stanzen" eine deutlich höhere Energie erforderlich (beispielsweise um einen Faktor drei bis fünf höher) als für die Phase "Einformen und Nietspreizen". Für eine nähere Erläuterung dieser Phasen sei auf die Figuren mit zugehöriger Beschreibung verwiesen.

Anhand des Gradienten der Kraft kann dabei der jeweilige Zeitpunkt eines Wechsels zwischen verschiedenen solcher Phasen sehr einfach und genau bestimmt werden. Beispielsweise gibt es einen besonders großen Gradienten bzw. einen Gradientensprung beim Übergang von der Phase "Schneiden bzw. Stanzen" zur Phase "Einformen und Nietspreizen". Damit stellt der Gradient der Kraft also eine besonders zweckmäßige Größe dar, anhand welcher der wenigstens eine Parameter der mittels des Schwingungserzeugers zu erzeugenden Schwingung vorgegeben und insbesondere verändert bzw. variiert werden kann, bzw. anhand welcher ein geeigneter Zeitpunkt dafür bestimmt werden kann. Es versteht sich, dass damit nicht nur die Parameter für die erwähnten Phasen unterschiedlich vorgegeben werden können, sondern auch innerhalb solcher Phasen oder auch ohne Vorgabe oder Definition solcher Phasen. Nichtsdestotrotz ist es besonders bevorzugt, wenn der wenigstens eine Parameter unter Berücksichtigung des Gradienten der Kraft für mehrere verschiedene Phasen des Eindrückens des Niets in die wenigstens zwei Bauteile unterschiedlich vorgegeben wird.

Unabhängig davon ist es jedoch auch besonders zweckmäßig, dass die Vorgabe des wenigstens einen Parameters umfasst, dass der wenigstens eine Parameter geändert wird, wenn der Gradient der Kraft einen vorgegebenen Schwellwert erreicht oder über- oder unterschreitet. Nach Über- und Unterschreiten kann beispielsweise je nach Definition und Art des Übergangs der Phasen unterschieden werden. Durch einen solchen Schwellwert kann beispielsweise sichergestellt werden, dass geringfügige Schwankungen der Kraft nicht sofort zu einer Änderung der Parameter führen. Insbesondere können so beispielsweise die Frequenz und/oder die Amplitude der Schwingung und/oder die Vorschubgeschwindigkeit verändert werden, wenn der Gradient der Kraft den vorgegebenen Schwellwert betragsmäßig überschreitet und/oder negativ ist. Letzteres ist besonders für den Übergang von der Phase "Schneiden bzw. Stanzen" zur Phase "Einformen und Nietspreizen" zweckmäßig.

Insgesamt kann damit also der Gradient der Kraft als neue Prozessregelgröße bzw. Eingangsgröße für die Prozessregelung beim schwingungsunterstützten bzw. Ultraschall-Stanznieten verwendet werden.

Eine Regelung (oder Steuerung) basierend auf einem reinen Positions- oder Kraftwert (beispielsweise mit einem Schwellwert für die Kraft) ist aufgrund einer gewissen Streuung dieser Werte in der Regel nicht ideal. Der Gradient der Kraft hingegen variiert bei gleichen oder vergleichbaren Materialkombinationen nur geringfügig und kann daher als geeignete Prozessregelgröße zur Überführung in eine nächste Phase bzw. Prozessstufe unabhängig von der Wegposition (des Stempels) verwendet werden. Der Gradient der Kraft kann hierzu während des Nietvorgangs bzw. während des Prozessverlaufs - oder zumindest zeitweise - überwacht werden. Eine Abtastrate sollte dabei ausreichend hoch sein, bei einem wegabhängigen Gradienten beispielsweise höchstens 0,5 µm für ein Abtastintervall, bei einem zeitabhängigen Gradienten mindestens 50 kHz oder mindestens 100 kHz für eine Abtastfrequenz.

Gegenstand der Erfindung ist weiterhin eine Stanznietvorrichtung mit einem Stempel, einem Gegenhalter, einem Schwingungserzeuger und einer Recheneinheit, die dazu eingerichtet ist, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung
- Figur 1: zeigt vereinfacht und schematisch eine Fertigungseinrichtung mit einer erfindungsgemäßen Stanznietvorrichtung.
- Figur 2: zeigt schematisch eine erfindungsgemäße Stanznietvorrichtung in einer bevorzugten Ausführungsform, mit der ein erfindungsgemäßes Verfahren durchführbar ist.
- Figuren 3a bis 3d: zeigen eine Stanznietvorrichtung bei verschiedenen Phasen der Durchführung eines erfindungsgemäßen Verfahrens in einer bevorzugten Ausführungsform.
- Figur 4: zeigt verschiedene Kraft-Positions-Verläufe bei einem Stanznietverfahren.
- Figuren 5a und 5b: zeigen einen Verlauf einer Kraft und einen zugehörigen örtlichen bzw. zeitlichen Gradienten der Kraft bei einem erfindungsgemäßen Verfahren.
- Figur 6: zeigt Verläufe von Parametern der zu erzeugenden Schwingung bei einem erfindungsgemäßen Verfahren in einer bevorzugten Ausführungsform.

### Detaillierte Beschreibung der Zeichnung

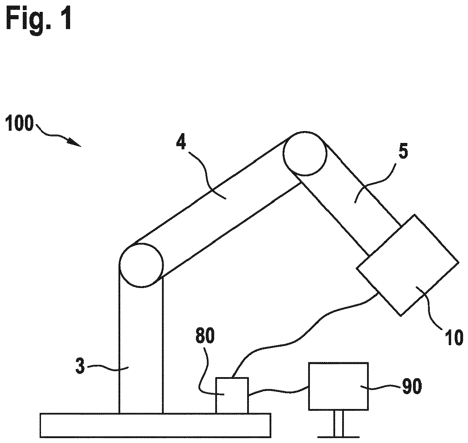

In Figur 1 ist vereinfacht und schematisch eine Fertigungseinrichtung 100 gezeigt. Bei der Fertigungseinrichtung 100 kann es sich beispielsweise um einen Industrieroboter in einer Fertigungshalle, beispielsweise für einen automobilen Karosseriebau, handeln.

Die Fertigungseinrichtung 100 weist dabei eine auf einem Boden angeordnete Trägerstruktur 3 und zwei daran angeordnete, miteinander verbundene und bewegliche Arme 4 und 5 auf. Am Ende des Armes 5 ist eine erfindungsgemäße Stanznietvorrichtung 10 in einer bevorzugten Ausführungsform angeordnet, welche hier nur schematisch gezeigt und nachfolgend noch detaillierter beschrieben wird.

Weiterhin ist eine Recheneinheit 80 gezeigt, bei der es sich beispielsweise um eine Steuereinheit der Stanznietvorrichtung 10 handelt. Die Recheneinheit 80 kann zudem auch als Steuereinheit für die gesamte Fertigungseinrichtung, d.h. neben der Stanznietvorrichtung insbesondere auch für die Ansteuerung der beweglichen Arme vorgesehen sein. Weiterhin sind Anzeigemittel 90, beispielsweise ein Display, vorgesehen, auf denen beispielsweise aktuelle Betriebsparameter der Stanznietvorrichtung angezeigt werden können. Es kann sich bei dem Element 90 auch um ein kombiniertes Anzeige-/Eingabemittel, z.B. einen Touchscreen, handeln.

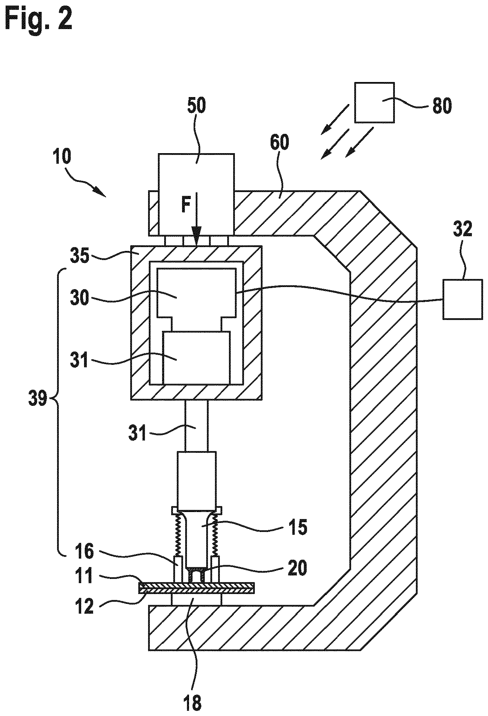

In Figur 2 ist schematisch eine erfindungsgemäße Stanznietvorrichtung 10 in einer bevorzugten Ausführungsform dargestellt. Die Stanznietvorrichtung 10 weist einen Rahmen 60 auf, der vorzugsweise in Form eines C-Rahmens oder C-Bügels vorliegt, an welchem die einzelnen Komponenten bei einer Stanznietvorrichtung in der Regel angeordnet sind, um die gewünschte Position zueinander einnehmen zu können. Über den Rahmen 60 kann die Stanznietvorrichtung 10 beispielsweise an einem Arm wie in Figur 1 gezeigt befestigt sein.

Die Stanznietvorrichtung 10 weist einen Stempel (bzw. eine Sonotrode) 15 auf, beispielhaft mit einem runden Querschnitt. Der Stempel 15 ist von einem (hülsenförmigen) Niederhalter 16 radial umgeben und relativ zu diesem in Längsrichtung beweglich angeordnet. Der Niederhalter ist hierbei vorzugsweise an einem sog. Nullamplitudendurchgang des Stempels, d.h. einer Position des Stempels, an der Schwingungsamplituden Null oder zumindest möglichst gering sind, mittels einer Feder befestigt. Insbesondere ist der Stempel 15 mit einem Antrieb 50 gekoppelt, der dazu dient, eine zum Eindrücken des Niets 20 in die beiden Bauteile 11, 12 benötigte Kraft F aufzubringen. Der Antrieb 50 kann beispielsweise mittels der Recheneinheit 80 gesteuert werden. Dabei kann die Kraft F beispielsweise über einen Sollwert vorgegeben und als Istwert erfasst werden.

Ebenfalls ist der Niederhalter 16 dazu eingerichtet, gegen die Oberfläche des dem Stempel 15 zugewandten Bauteils 11 mit einer Niederhaltekraft zu drücken. Hierzu kann beispielsweise ein eigener Antrieb vorgesehen sein. Jedoch kann der Niederhalter auch (wie hier gezeigt) an den Antrieb des Stempels oder an den Stempel selbst gekoppelt sein, beispielsweise mittels einer Feder.

Auf der dem Stempel 15 und dem Niederhalter 16 gegenüberliegenden Seite der beiden Bauteile 11, 12 ist ein Gegenhalter in Form einer Matrize 18 angeordnet. Der Stempel 15 und die Matrize 18 sind in vertikaler Richtung, wie auch der Niederhalter 16, beweglich angeordnet und relativ zueinander bewegbar. Der Niederhalter 16 und die Matrize 18 dienen dazu, die beiden Bauteile 11, 12 zwischen dem Niederhalter 16 und der Matrize 18 während der Bearbeitung durch den Stempel 15 einzuspannen bzw. zusammenzudrücken.

Der Niet 20, hier beispielhaft ein Halbhohlniet, besteht bevorzugt aus einem gegenüber den Werkstoffen der beiden Bauteile 11, 12 härteren Material, zumindest im Bereich eines Nietschafts. Die dem Bauteil 11 abgewandte, ebene Oberseite des Niets ist in Wirkverbindung mit dem Stempel 15 angeordnet, der an der Oberseite des Niets 20 flächig anliegt.

Der Stempel 15 ist mit einem (mechanischen) Schwingungskonverter 30, beispielsweise einem Piezokonverter, wirkverbunden. Der Schwingungskonverter 30 wiederum ist mit einem (elektrischen) Schwingungserzeuger, beispielsweise einem Ultraschallgenerator, verbunden. Auf diese Weise können Schwingungen bzw. Vibrationen erzeugt und auf den Stempel, und damit den Niet eingekoppelt werden. Insbesondere werden mittels des Schwingungserzeugers 32 Ultraschallschwingungen mit einer Schwingweite (Abstand zwischen maximaler positiver und negativer Amplitude einer Schwingung) zwischen 10 µm und 110 µm (entspricht einer Amplitude von 5 µm bis 55 µm) und einer Frequenz zwischen 15 kHz und 35 kHz oder ggf. auch höher erzeugt. Der Schwingungserzeuger 32 ist an die Recheneinheit 80 angebunden (oder kann auch Teil der Recheneinheit sein) und kann von dieser angesteuert werden.

Bei dem Antrieb 50 kann es sich beispielsweise um einen Antrieb mit Kugel-, Rollen-, Planetengewinde- oder Gewinderollenschraubtrieb oder dergleichen handeln, der dazu geeignet ist, eine Kraft F zum Eindrücken des Niets 20 in die Bauteile 11, 12 aufzubringen. An dem Antrieb 50 ist eine Haltevorrichtung 35, beispielsweise in Form eines Rahmens oder eines Gestells, angebracht. An der Haltevorrichtung 35 ist ein Schwingsystem 39, das vorliegend den Schwingungskonverter 30, einen Booster 31 sowie den Stempel bzw. die Sonotrode 15 umfasst, angeordnet.

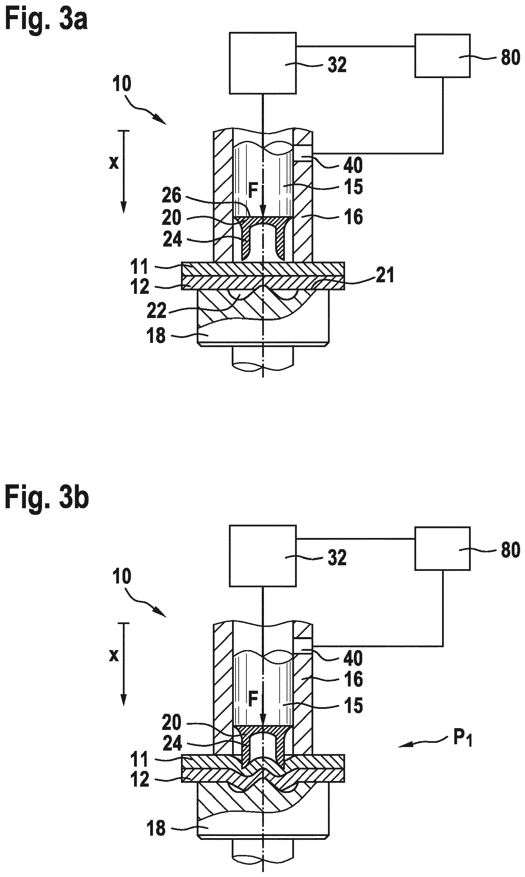

In den Figuren 3a bis 3d ist die Stanznietvorrichtung 10, wie sie in Figur 2 detaillierter beschrieben wurde, bei verschiedenen Phasen der Durchführung eines erfindungsgemäßen Verfahrens in einer bevorzugten Ausführungsform dargestellt.

Weiterhin ist beispielhaft ein Positionssensor 40 gezeigt, der dazu eingerichtet ist, eine Position oder einen Weg x des Stempels 15 zu erfassen. Diese Position x kann dabei an die Recheneinheit 80 übermittelt werden. Die Position des Stempels kann jedoch beispielsweise auch über den Antrieb des Stempels ermittelt werden, beispielsweise bei einem Kugelgewindetrieb über eine Steigung des Gewindes und eine Anzahl an Umdrehungen.

Die in Figur 3a gezeigte Phase des erfindungsgemäßen Verfahrens stellt einen Beginn des Stanznietverfahrens dar, bei dem der Nietschaft 24 in Wirkverbindung mit der Oberseite des Bauteils 11 gelangt. Dabei wird der Stempel 15 mit der Kraft F gegen das dem Stempel 15 zugewandte Bauteil 11 gedrückt.

In einer in Figur 3b gezeigten weiteren Phase, hier mit P₁ bezeichnet, d.h. während des weiteren Verlaufs des Nietvorgangs und unter Unterstützung der in die Bauteile 11, 12 eingekoppelten Schwingungen schneidet bzw. stanzt der Nietschaft 24 sich zunächst in das Bauteil 11 ein. Diese Phase P1 wird damit auch als Phase "Schneiden bzw. Stanzen" bezeichnet. Dabei werden die beiden Bauteile 11, 12 plastisch verformt, wobei das einer Ausnehmung 22 der Matrize 18 zugewandte Bauteil 12 in den entsprechenden Bereichen in die Ausnehmung 22 eingedrückt wird.

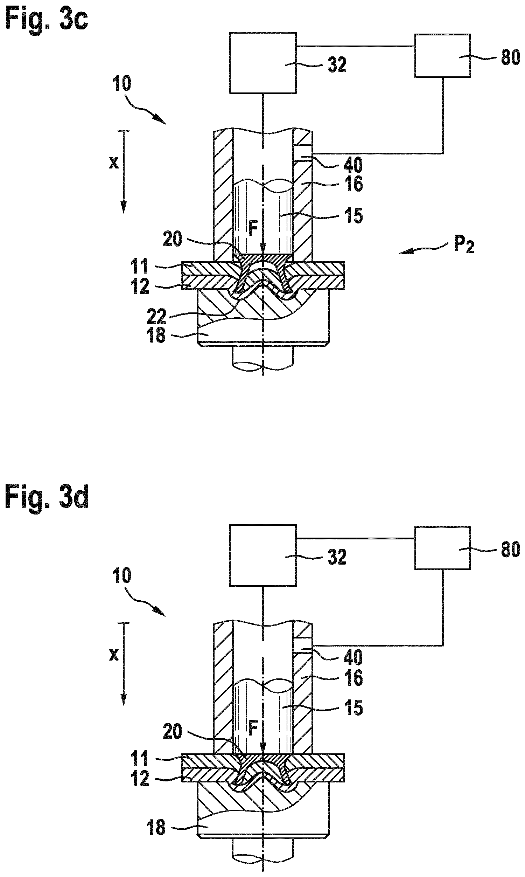

Während des weiteren Bewegungswegs bzw. der weiteren Abwärtsbewegung des Niets 20 entsprechend der Figur 3c wird der Nietschaft 24 im Bereich der Ausnehmung 22 nach außen gespreizt, wodurch die beiden Bauteile 11, 12 in Axialrichtung sicher form- und kraftschlüssig miteinander verbunden werden. Diese hier mit P₂ bezeichnete Phase wird demzufolge auch als Phase "Einformen und Nietspreizen" bezeichnet. Die in der Phase P₂ nötige Energie zum Eindrücken des Niets ist dabei mitunter deutlich geringer als bei der Phase P₁.

Wesentlich kann dabei sein, dass entsprechend der Figur 3d, die die Endposition des Niets 20 zeigt, der Nietschaft 24 nicht aus dem Bauteil 12 herausragt bzw. dieses nicht vollständig durchdringt.

Nachdem der Niet 20 die in der Figur 3d dargestellte Endposition erreicht hat, bei der die Oberseite 26 des Niets 20 zumindest in etwa bündig mit der Oberseite des Bauteils 11 abschließt, wird anschließend der Stempel 15 wieder von den Bauteilen 11, 12 in entgegengesetzter Richtung nach oben bewegt.

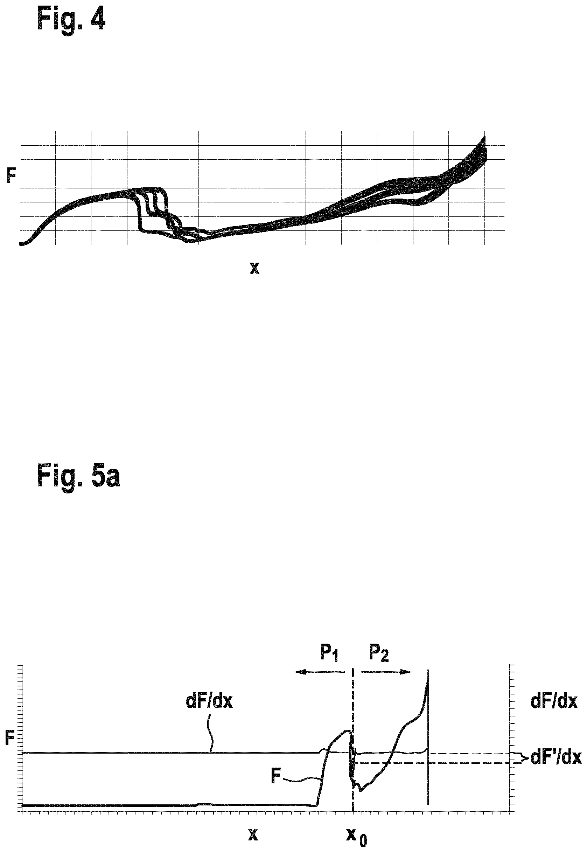

In Figur 4 sind verschiedene Kraft-Positions-Verläufe bei einem Stanznietverfahren (hierbei kann es sich beispielsweise um das in den Figuren 3a bis 3d gezeigte Verfahren handeln) für jeweils verschiedene Versuchs-Stanznietvorgänge dargestellt. Hierzu ist eine Kraft F über dem Weg bzw. der Position x aufgetragen.

An den beispielhaft vier Verläufen ist zu sehen, dass die Position, zu welcher ein Kraftsprung auftritt, als auch eine Höhe des jeweiligen Kraftsprungs variieren. Ein solcher Kraftsprung, bei dem der Wert der Kraft plötzlich abfällt, gibt dabei einen Übergang zwischen den Phasen P₁ und P₂ gemäß den Figuren 3b und 3c an. Eine Prozessregelung basierend auf einem Wert der Kraft über einer Position ist damit nur schwierig möglich.

An den Verläufen ist jedoch auch zu erkennen, dass der Gradient der Kraft, hier der örtliche Gradient, immer in einem ähnlichen Bereich liegt und sich daher sehr gut für die Prozessregelung eignet.

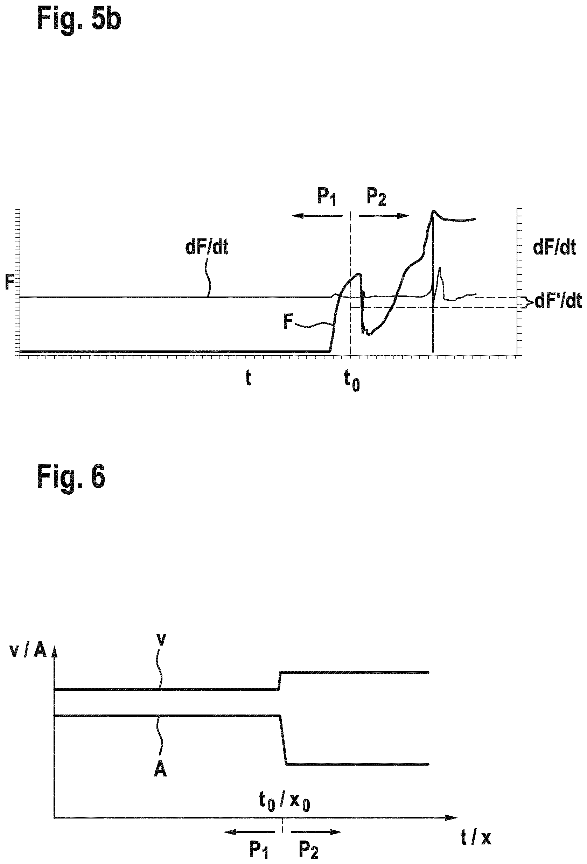

In Figuren 5a und 5b sind jeweils ein Verlauf einer Kraft und ein zugehöriger Gradient der Kraft bei einem erfindungsgemäßen Verfahren dargestellt. Figur 5a zeigt dabei einen örtlichen Gradienten, wozu die Kraft F und der Gradient dF/dx der Kraft über der Position bzw. dem Weg x aufgetragen sind. Figur 5b zeigt den zugehörigen zeitlichen Gradienten, wozu die Kraft F und der Gradient dF/dt der Kraft über der Zeit t aufgetragen sind. Zudem sind jeweils zugehörige Schwellwerte dF'/dx bzw. dF'/dt gezeigt.

Sobald beim Eindrücken des Niets also der Gradient der Kraft den zugehörigen Schwellwert erreicht bzw. unterschreitet, in den gezeigten Fällen bei Position x₀ bzw. zur Zeit t₀, liegt also ein Übergang von der Phase P₁ zur Phase P₂ vor und die Parameter zur Erzeugung der Schwingung können geändert werden.

In Figur 6 sind hierzu Verläufe von Parametern der zu erzeugenden Schwingung bei einem erfindungsgemäßen Verfahren in einer bevorzugten Ausführungsform dargestellt. Hierzu sind eine Vorschubgeschwindigkeit v und eine Amplitude A der Schwingung über der Zeit t bzw. der Position x schematisch aufgetragen.

Bei Erreichen der Position x₀ bzw. der Zeit t₀ und damit bei Übergang von der Phase P1 zur Phase P2, die basierend auf dem überwachten Gradienten der Kraft erkannt werden, wird hier beispielhaft die Amplitude A reduziert oder die Vorschubgeschwindigkeit v erhöht. Die Parametrierung der Amplitude ist dabei insbesondere abhängig von der jeweiligen Materialkombination. Vergleichbares gilt für die Vorschubgeschwindigkeit, insbesondere vor und nach dem Sprung ist eine Möglichkeit vorhanden, die eingebrachte Energie zu regeln.

Der Gradient der Kraft stellt also beim schwingungsunterstützten Stanznieten eine besonders geeignete Größe dar, basierend auf welcher Parameter der zu erzeugenden Schwingung - insbesondere zudem auch weitere Parameter der Stanznietvorrichtung - vorgegeben bzw. geregelt werden können.

## Patentansprüche

1. Verfahren zum Verbinden wenigstens zweier Bauteile (11, 12) mittels einer Stanznietvorrichtung (10), bei dem die wenigstens zwei Bauteile (11, 12) zwischen einem Stempel (15) und einem Gegenhalter (18) angeordnet sind,
wobei ein zwischen dem Stempel (15) und einem dem Stempel zugewandten Bauteil (11) der wenigstens zwei Bauteile angeordneter Niet (20) mittels des Stempels (15) in die wenigstens zwei Bauteile (11, 12) eingedrückt wird, indem der Stempel (15) mit einer Kraft (F) beaufschlagt wird,
wobei wenigstens eine beim Eindrücken des Niets (20) beteiligte Komponente (11, 12, 15, 18, 20) beim Eindrücken mittels eines Schwingungserzeugers (32) in Schwingung versetzt wird,
wobei während des Eindrückens des Niets (20) wenigstens zeitweise ein Gradient (dF/dx, dF/dt) der Kraft ermittelt wird, und
**dadurch gekennzeichnet, dass** wenigstens ein Parameter (A, v) der mittels des Schwingungserzeugers (32) zu erzeugenden Schwingung wenigstens zeitweise unter Berücksichtigung des Gradienten (dF/dx, dF/dt) der Kraft vorgegeben wird, wobei der wenigstens eine Parameter (A, v) der mittels des Schwingungserzeugers (32) zu erzeugenden Schwingung eine Frequenz und/oder eine Amplitude der Schwingung umfasst.

2. Verfahren nach Anspruch 1, wobei die Vorgabe des wenigstens einen Parameters (A, v) wenigstens zeitweise unter Berücksichtigung des Gradienten (dF/dx, dF/dt) der Kraft umfasst, dass der wenigstens eine Parameter geändert wird, wenn der Gradient (dF/dx, dF/dt) der Kraft einen vorgegebenen Schwellwert (dF'/dx, dF'/dt) erreicht oder über- oder unterschreitet.

3. Verfahren nach Anspruch 1 oder 2, wobei weiterhin eine Vorschubgeschwindigkeit wenigstens zeitweise unter Berücksichtigung des Gradienten (dF/dx, dF/dt) der Kraft vorgegeben wird.

4. Verfahren nach Anspruch 2 und 3, wobei die Frequenz und/oder die Amplitude der Schwingung und/oder die Vorschubgeschwindigkeit verändert werden, wenn der Gradient (dF/dx, dF/dt) der Kraft den vorgegebenen Schwellwert (dF'/dx, dF'/dt) betragsmäßig überschreitet und/oder negativ ist.

5. Verfahren nach einem der vorstehenden Ansprüche, wobei der Gradient (dF/dx, dF/dt) der Kraft als zeitlicher und/oder als örtlicher Gradient ermittelt wird.

6. Verfahren nach einem der vorstehenden Ansprüche, wobei der wenigstens eine Parameter (A, v) unter Berücksichtigung des Gradienten (dF/dx, dF/dt) der Kraft für mehrere verschiedene Phasen (P₁, P₂) des Eindrückens des Niets in die wenigstens zwei Bauteile (11, 12) unterschiedlich vorgegeben wird.

7. Verfahren nach einem der vorstehenden Ansprüche, wobei als Schwingungserzeuger (32) ein Schall-Generator, insbesondere ein Ultraschall-Generator, verwendet wird.

8. Verfahren nach einem der vorstehenden Ansprüche, wobei die wenigstens eine beim Eindrücken des Niets (20) beteiligte Komponente (11, 12, 15, 18, 20), die beim Eindrücken mittels eines Schwingungserzeugers (32) in Schwingung versetzt wird, den Stempel (15) umfasst.

9. Stanznietvorrichtung (10) mit einem Stempel (15), einem Gegenhalter (18), einem Schwingungserzeuger (32), und einer Recheneinheit (80), die dazu eingerichtet ist, ein Verfahren nach einem der vorstehenden Ansprüche durchzuführen.

10. Computerprogramm, das die Stanznietvorrichtung des Anspruchs 9 veranlasst, ein Verfahren nach einem der Ansprüche 1 bis 8 durchzuführen, wenn es auf der Recheneinheit (80) ausgeführt wird.

11. Maschinenlesbares Speichermedium mit einem darauf gespeicherten Computerprogramm nach Anspruch 10.

## Claims

1. Method for connecting at least two component parts (11, 12) by means of a punch riveting device (10), in which the at least two component parts (11, 12) are arranged between a punch (15) and a dolly (18),
wherein a rivet (20) arranged between the punch (15) and one component part (11), facing the punch, of the at least two component parts is pushed into the at least two component parts (11, 12) by means of the punch (15) in that the punch (15) is subjected to a force (F), wherein at least one component (11, 12, 15, 18, 20) involved in the pushing in of the rivet (20) is set in vibration by means of a vibration generator (32) during the pushing in,
wherein a gradient (dF/dx, dF/dt) of the force is determined at least at times during the pushing in of the rivet (20), and
**characterized in that** at least one parameter (A, v) of the vibration to be generated by means of the vibration generator (32) is preset at least at times with the gradient (dF/dx, dF/dt) of the force taken into account, wherein the at least one parameter (A, v) of the vibration to be generated by means of the vibration generator (32) comprises a frequency and/or an amplitude of the vibration.

2. Method according to Claim 1, wherein the presetting of the at least one parameter (A, v) at least at times with the gradient (dF/dx, dF/dt) of the force taken into account comprises that the at least one parameter is altered if the gradient (dF/dx, dF/dt) of the force reaches or overshoots or undershoots a preset threshold value (dF'/dx, dF'/dt).

3. Method according to Claim 1 or 2, wherein furthermore a feed rate is preset at least at times with the gradient (dF/dx, dF/dt) of the force taken into account.

4. Method according to Claims 2 and 3, wherein the frequency and/or the amplitude of the vibration and/or the feed rate are altered if the gradient (dF/dx, dF/dt) of the force is of an amount that overshoots the preset threshold value (dF'/dx, dF'/dt) and/or is negative.

5. Method according to one of the preceding claims, wherein the gradient (dF/dx, dF/dt) of the force is determined as a temporal and/or spatial gradient.

6. Method according to one of the preceding claims, wherein the at least one parameter (A, v) with the gradient (dF/dx, dF/dt) of the force taken into account is preset differently for a number of different phases (P₁, P₂) of the pushing in of the rivet into the at least two component parts (11, 12).

7. Method according to one of the preceding claims, wherein a sound generator, in particular an ultrasound generator, is used as the vibration generator (32).

8. Method according to one of the preceding claims, wherein the at least one component (11, 12, 15, 18, 20) involved in the pushing in of the rivet (20) that is set in vibration by means of a vibration generator (32) during the pushing in comprises the punch (15).

9. Punch riveting device (10) with a punch (15), a dolly (18), a vibration generator (32), and a computing unit (80), which is designed to carry out a method according to one of the preceding claims.

10. Computer program, which causes the punch riveting device of Claim 9 to carry out a method according to one of Claims 1 to 8 when it is run on the computing unit (80) .

11. Machine-readable storage medium with a computer program according to Claim 10 stored on it.

## Revendications

1. Procédé de liaison d'au moins deux composants (11, 12) au moyen d'un dispositif de rivetage auto-perforant (10), procédé dans lequel les au moins deux composants (11, 12) sont disposés entre un poinçon (15) et un contre-support (18),
un rivet (20) disposé entre le poinçon (15) et un composant (11) des au moins deux composants dirigés vers le poinçon étant enfoncé dans les au moins deux composants (11, 12) au moyen du poinçon (15) du fait que le poinçon (15) est soumis à une force (F),
au moins un composant (11, 12, 15, 18, 20) impliqué dans l'enfoncement du rivet (20) étant amené à vibrer au moyen d'un générateur de vibrations (32) pendant l'enfoncement,
le gradient (dF/dx, dF/dt) de la force étant déterminé au moins temporairement pendant l'enfoncement du rivet (20), et
**caractérisé en ce qu'**au moins un paramètre (A, v) de la vibration à générer au moyen du générateur de vibrations (32) est spécifié au moins temporairement avec prise en compte du gradient (dF/dx, dF/dt) de la force, l'au moins un paramètre (A, v) de la vibration à générer au moyen du générateur de vibrations (32) comprenant la fréquence et/ou l'amplitude de la vibration.

2. Procédé selon la revendication 1, la spécification de l'au moins un paramètre (A, v) comprenant, au moins temporairement, avec prise en compte du gradient (dF/dx, dF/dt) de la force, le fait que l'au moins un paramètre est modifié lorsque le gradient (dF/dx, dF/dt) de la force atteint une valeur de seuil prédéterminée (dF'/dx, dF'/dt) ou devient supérieur ou inférieur à celle-ci.

3. Procédé selon la revendication 1 ou 2, la vitesse d'avance étant en outre spécifiée au moins temporairement avec prise en compte du gradient (dF/dx, dF/dt) de la force.

4. Procédé selon les revendications 2 et 3, la fréquence et/ou l'amplitude de la vibration et/ou la vitesse d'avance étant modifiées lorsque le gradient (dF/dx, dF/dt) de la force devient supérieur en valeur absolue à la valeur de seuil spécifiée (dF'/dx, dF'/dt) et/ou est négatif.

5. Procédé selon l'une des revendications précédentes, le gradient (dF/dx, dF/dt) de la force étant déterminé comme étant un gradient temporel et/ou local.

6. Procédé selon l'une des revendications précédentes, l'au moins un paramètre (A, v) étant spécifié, avec prise en compte du gradient (dF/dx, dF/dt) de la force, de manière différente pour plusieurs phases différentes (P₁, P₂) de l'enfoncement du rivet dans les au moins deux composants (11, 12).

7. Procédé selon l'une des revendications précédentes, un générateur acoustique, en particulier un générateur d'ultrasons, étant utilisé comme générateur de vibrations (32).

8. Procédé selon l'une des revendications précédentes, l'au moins un composant (11, 12, 15, 18, 20), qui est impliqué dans l'enfoncement du rivet (20) et qui est amené à vibrer au moyen d'un générateur de vibrations (32) pendant l'enfoncement, comprenant le poinçon (15).

9. Dispositif de rivetage auto-perforant (10) comprenant un poinçon (15), un contre-support (18), un générateur de vibrations (32) et une unité de calcul (80) qui est conçue pour mettre en œuvre un procédé selon l'une des revendications précédentes.

10. Logiciel qui, lorsqu'il est exécuté sur l'unité de calcul (80), ordonne au dispositif de rivetage auto-perforant selon la revendication 9 de mettre en œuvre un procédé selon l'une des revendications 1 à 8.

11. Support de stockage lisible par machine sur lequel est stocké un logiciel selon la revendication 10.
